# EUROPÄISCHE PATENTSCHRIFT

(11) **EP 4 018 105 B1**
(45) Veröffentlichungstag und Bekanntmachung des Hinweises auf die Patenterteilung: **05.04.2023**
(21) Anmeldenummer: 20754162.4
(22) Anmeldetag: 27.07.2020
(51) Int. Cl.: F16C 19/50, F16C 33/30, F16C 33/46, F04B 1/2085, F01B 3/00, F16C 11/06

(54) **SCHWENKWIEGENLAGERUNG UND VERFAHREN ZUR HERSTELLUNG EINER SYNCHRONISATIONSVORRICHTUNG EINER SCHWENKWIEGENLAGERUNG**
PIVOT CRADLE BEARING AND METHOD FOR PRODUCING A SYNCHRONIZATION DEVICE OF A PIVOT CRADLE BEARING
PALIER À BERCEAU PIVOTANT ET PROCÉDÉ DE FABRICATION D'UN DISPOSITIF DE SYNCHRONISATION D'UN PALIER À BERCEAU PIVOTANT

(30) Priorität: 21.08.2019 DE 102019122435
(43) Veröffentlichungstag der Anmeldung: 29.06.2022
(73) Patentinhaber: Schaeffler Technologies AG & Co. KG, 91074 Herzogenaurach (DE)
(72) Erfinder: KRAMAR, Vasyl, 97508 Grettstadt (DE)
(86) Internationale Anmeldenummer: PCT/DE2020/100668
(87) Internationale Veröffentlichungsnummer: WO 2021/032243

(56) Entgegenhaltungen:
- DE-A1-102006 023 711
- DE-B1- 2 521 312
- DE-B4-102009 013 094
- DE-C1- 3 442 391

## Beschreibung

Die Erfindung betrifft eine für die Verwendung in einer Axialkolbenmaschine geeignete Schwenkwiegenlagerung nach dem Oberbegriff des Anspruchs 1. Ferner betrifft die Erfindung ein Verfahren zur Herstellung einer Synchronisationsvorrichtung einer Schwenkwiegenlagerung, wobei durch die Synchronisationsvorrichtung Bewegungen eines Wälzkörper, insbesondere Rollen, führenden Käfigs einer Schwenkwiegenlagerung mit den Schwenkbewegungen einer Schwenkwiege synchronisiert werden.

Eine gattungsgemäße Schwenkwiegenlagerung für eine hydraulische Axialkolbenmaschine ist beispielsweise aus der DE 25 21 312 B1 bekannt. Mit Hilfe der bekannten Schwenkwiegenlagerung kann eine Schrägscheibe, das heißt Schwenkwiege, in veränderbarer Winkelstellung in einem Gehäuse gelagert werden. Durch Verstellung der Winkellage der Schrägscheibe verändert sich der Hub von Kolben der Axialkolbenmaschine. Das bekannte Schrägscheiben-Schwenklager umfasst Rollen als Wälzkörper, welche in einem Käfig geführt sind. An dem Käfig ist ein sich etwa radial zur Krümmung des bogenförmigen Käfigs erstreckender Stab schwenkbar angelenkt, wobei der Stab im Fall der DE 25 21 312 B1 gegenüber dem Käfig zusätzlich radial verschieblich ist. Der Stab ist mit seinem einen Ende ortsfest an einer Stelle des Gehäuses schwenkbar gelagert und mit seinem anderen Ende an der Schrägscheibe schwenkbar und in seiner Längsrichtung verschiebbar angeordnet. Jeder Verschwenkung der Schrägscheibe ist damit eine Verlagerung des Käfigs zugeordnet, womit insgesamt eine Synchronisationsvorrichtung gegeben ist.

Eine weitere Axialkolbenmaschine mit einem Schwenklager ist in der DE 10 2006 023 711 A1 beschrieben. In diesem Fall ist ein Käfigsegment durch ein winkelförmiges Führungselement geführt, welches drehbar und verschiebbar am Käfigsegment gelagert ist und zwei Führungsschenkel aufweist, die an den relativ zueinander verschwenkbaren Teilen auf verschiedene Weise angehängt sind.

Eine weitere Nachführeinrichtung für einen Käfig eines Segmentwälzlagers einer Wiege, das heißt einer Schwenkwiegenlagerung, ist in der DE 34 42 391 C1 offenbart. Die Nachführeinrichtung umfasst zwei Führungsnuten, wobei ein Führungsglied in einer Kreuzungsstelle der Führungsnuten geführt ist.

Schrägscheiben-Schwenklager mit Kulissensteuerungen zur Synchronisation der Käfigbewegung mit der Schwenkbewegung eines Lagerteils sind auch in den Dokumenten DE 10 2009 013 094 B4 und DE 10 2012 202 742 B3 beschrieben.

Diverse Gestaltungsmöglichkeiten von Käfigen von Schwenkwiegenlagerungen gehen aus den Dokumenten DE 87 05 446 U1, DE 10 2005 034 739 A1 und DE 10 2014 206 803 B3 hervor.

Eine Schwenkwiegenlagerung, bei der die Bewegung eines Käfigs durch Anschläge begrenzt ist, ist in der DE 10 2017 126 525 A1 beschrieben.

Komplette Axialkolbenmaschinen einschließlich Schwenkwiegenlagerung sind zum Beispiel in den Dokumenten DE 199 60 941 A1 und DE 10 2013 210 070 B3 beschrieben.

Der Erfindung liegt die Aufgabe zugrunde, eine Schwenkwiegenlagerung mit einer Synchronisationsvorrichtung, welche die Relativbewegung der beiden schwenkbar zueinander gelagerten Teile mit der Bewegung eines Käfigsegments synchronisiert, gegenüber dem genannten Stand der Technik insbesondere unter fertigungstechnischen Aspekten weiterzuentwickeln.

Diese Aufgabe wird erfindungsgemäß durch eine Schwenkwiegenlagerung mit den Merkmalen des Anspruchs 1. Ebenso wird die Aufgabe gelöst durch ein Verfahren zur Herstellung einer Synchronisationsvorrichtung gemäß Anspruch 7. Im Folgenden im Zusammenhang mit dem Herstellungsverfahren erläuterte Ausgestaltungen und Vorteile der Erfindung gelten sinngemäß auch für die Vorrichtung, das heißt die Schwenkwiegenlagerung, und umgekehrt.

Die Schwenkwiegenlagerung umfasst in an sich bekannter Grundkonzeption ein gebogenes Käfigsegment, in welchem Wälzkörper, insbesondere Zylinderrollen, geführt sind, die zwischen zwei gegeneinander verschwenkbaren Lagerteilen abrollen, wobei eine Synchronisationsvorrichtung, die zur Synchronisation der Relativbewegung der Lagerteile mit der Verlagerung des Käfigsegments ausgebildet ist, einen Schwenkhebel umfasst, der im Käfigsegment gelagert ist.

Erfindungsgemäß ist zur Lagerung des Schwenkhebels im Käfigsegment ein Gelenklager vorgesehen ist, welches bezüglich einer mittig zwischen eine Innenumfangsfläche und eine Außenumfangsfläche des Käfigsegments gelegten Tangentialebene unsymmetrisch ausgebildet ist.

Der Schwenkhebel ragt beidseitig aus dem Gelenklager heraus. Insofern ist eine Gemeinsamkeit zwischen der Lagerung des Schwenkhebels und einem aus der DE 10 2009 027 204 A1 bekannten Kugelhülsengelenk gegeben. Im Unterschied zur Lagerung des Schwenkhebels ist das Kugelhülsengelenk jedoch spiegelsymmetrisch zu einer die Kugelhülse schneidenden Mittelebene ausgebildet.

Es hat sich gezeigt, dass durch die unsymmetrische Gestaltung des Gelenklagers der Schwenkwiegenlagerung fertigungstechnisch vorteilhafte Möglichkeiten gegeben sind, das Lageraußenteil einstückig durch das Käfigsegment zu bilden.

Die Tangentialebene schneidet das Gelenklager mittig, das heißt im Drehpunkt. Die das Gelenklager betreffenden geometrischen Angaben beziehen sich, soweit nicht anders angegeben, auf die Normalstellung des Schwenkhebels. In der Normalstellung ist der Schwenkhebel in Radialrichtung der Schwenkwiegenlagerung ausgerichtet und schneidet damit die Schwenkachse der Schwenkwiegenlagerung. Eine durch den Schwenkhebel definierte, in Radialrichtung der Schwenkwiegenlagerung ausgerichtete Gerade stellt eine Flächennormale der Tangentialebene dar.

Gemäß verschiedener möglicher Ausgestaltungen ist ein durch den Schwenkhebel gebildetes Gleitlagerinnenstück im Gegensatz zum durch das Käfigsegment gebildeten Gleitlageraußenstück symmetrisch ausgebildet.

Unter einer Symmetrie ist hierbei eine Spiegelsymmetrie bezüglich der Tangentialebene zu verstehen. Typischerweise hat das Gleitlagerinnenstück eine sphärische Form. Eine Verschiebbarkeit des Schwenkhebels relativ zum Käfigsegment in Radialrichtung, das heißt in Längsrichtung des Schwenkhebels, ist in bevorzugter Ausgestaltung nicht vorgesehen.

Gemäß einer ersten möglichen Bauform ist an der Außenumfangsfläche des Käfigsegments eine das Gelenklager umgebende, ringförmige Vertiefung gebildet, welche außerhalb eines ringförmigen Sicherungskragens angeordnet ist, der unmittelbar durch das Käfigsegment gebildet ist und zusammen mit einer durch das Käfigsegment bereitgestellten sphärischen Gleitlagerfläche den Schwenkhebel im Käfigsegment unverlierbar hält. Das Gleitlageraußenstück ist vorzugsweise einstückig unmittelbar durch das Käfigsegment gebildet.

Ein Umformung eines Lagerteils eines Kugelgelenks ist prinzipiell zum Beispiel aus den Dokumenten WO 2004/020847 A1 und DE 20 2007 000 609 U1 bekannt, wobei diese bekannten Kugelgelenke als symmetrische Gelenke gestaltet sind.

Weiterhin wird auf das Dokument WO 2007/115516 A1 hingewiesen, in welchem die Nutzung eines Kaltumformverfahrens zur Herstellung eines Radialgelenks beschrieben ist. Ein Kugelzapfen, welcher eine Komponente des Radialgelenks darstellt, ragt einseitig aus einem Gehäuse heraus.

Gemäß einer zweiten möglichen Bauform ist der Schwenkhebel im Gelenklager durch einen im Käfigsegment gehaltenen Sicherungsring gegen Herausziehen gesichert.

In diesem Zusammenhang wird auf die WO 2011/032616 A1 hingewiesen, welche ein Gelenk mit an einem Zapfen befestigten Kugelkopf beschreibt, wobei zur Verspannung einer Lagerschale eine Ringmutter vorgesehen ist.

In beiden Bauformen ist das Käfigsegment vorzugsweise aus Kunststoff gefertigt. Ebenso kommt eine Fertigung des Käfigsegments aus Metall in Betracht. Sowohl bei einer Fertigung des Käfigsegments aus Kunststoff als auch bei einer Fertigung des Käfigsegments aus Metall handelt es sich bei dem Käfigsegment vorzugsweise um ein einstückiges Bauteil, wobei das Gelenklageraußenstück unmittelbar durch dieses Bauteil gebildet ist. Bei dem Schwenkhebel handelt es sich in beiden Fällen vorzugsweise um ein Metallteil.

Die Synchronisationsvorrichtung der Schwenkwiegenlagerung ist in folgenden Schritten herstellbar:
- Bereitstellung eines Käfigsegment-Rohteils, in welchem eine Durchgangsbohrung mit einem zylindrischen Abschnitt und einem sich an den zylindrischen Abschnitt anschließenden, verjüngenden Abschnitt angeordnet ist,
- Bereitstellung eines Schwenkhebels, welcher eine von seinen Enden beabstandete sphärische Verdickung aufweist,
- Einsetzen des Schwenkhebels in die Durchgangsbohrung des Käfigsegment-Rohteils, so dass die sphärische Verdickung zur Anlage am sich verjüngenden Abschnitt der Durchgangsbohrung kommt,
- Verengung des zylindrischen Abschnitts der Durchgangsbohrung, womit der Schwenkhebel gegen Herausziehen aus der Durchgangsbohrung gesichert wird.

Bei der ersten Bauform wird ein Teilbereich des zylindrischen Abschnitts der Durchgangsbohrung beispielsweise durch Erhitzen und Verformen des Käfigsegment-Rohteils verengt. Je nach Werkstoff kommt auch eine Kaltumformung des Käfigsegment-Rohteils in Betracht.

Unabhängig von der Temperatur, bei welcher die Verformung vorgenommen wird, die Verformung des Käfigsegment-Rohteils zum Beispiel durch Aufsetzen eines Stempels mit ringförmiger Stempelfläche auf die Außenumfangsfläche des Käfigsegment-Rohteils erfolgen.

Entspricht das Gelenklager der zweiten Bauform, so entfällt in bevorzugter Verfahrensführung das Verformen des Käfigsegment-Rohteils. Vielmehr wird in diesem Fall der zylindrische Abschnitt durch Einsetzen des Sicherungsrings in das Käfigsegment-Rohteil verengt.

In beiden Bauformen der Schwenkwiegenlagerung hat das Gelenklager in beiden Axialrichtungen, bezogen auf die Längsrichtung des Schwenkhebels, typischerweise eine unterschiedliche mechanische Belastbarkeit. Damit ist das Gelenklager besonders gut auf die tatsächlichen Belastungszustände in einer Axialkolbenmaschine abstimmbar.

Nachfolgend werden zwei Ausführungsbeispiele der Erfindung anhand einer Zeichnung näher erläutert. Hierin zeigen:
- Fig. 1: Komponenten eines ersten Ausführungsbeispiels einer Schwenkwiegenlagerung,
- Fig. 2: einen Käfig der Schwenkwiegenlagerung nach Fig. 1 in geschnittener perspektivischer Ansicht,
- Fig. 3 bis 6: Montageschritte zur Herstellung der Anordnung nach Fig. 1,
- Fig. 7: ausschnittsweise ein zweites Ausführungsbeispiel einer Schwenkwiegenlagerung,
- Fig. 8: einen Sicherungsring der Anordnung nach Fig. 7,
- Fig. 9: einen Montageschritt zur Herstellung der Anordnung nach Fig. 7.

Die folgenden Erläuterungen beziehen sich, soweit nicht anders angegeben, auf beide Ausführungsbeispiele. Einander entsprechende oder prinzipiell gleichwirkende Teile sind in allen Figuren mit den gleichen Bezugszeichen gekennzeichnet.

Eine lediglich ausschnittsweise dargestellte Schwenkwiegenlagerung 1 umfasst ein gekrümmtes Käfigsegment 2, in welchem nicht dargestellte Wälzkörper, nämlich Zylinderrollen, in Käfigtaschen 3 geführt sind. Die Wälzkörper kontaktieren im fertig montierten Zustand der Schwenkwiegenlagerung 1 eine Schwenkwiege und ein Gehäuse als relativ zueinander verschwenkbare Lagerteile. Die Schwenkwiegenlagerung 1 ist Teil einer nicht weiter dargestellten Axialkolbenmaschine, das heißt einer Axialkolbenpumpe oder eines Axialkolbenmotors. Mit Hilfe der Schwenkwiegenlagerung 1 kann der Volumenstrom durch die Axialkolbenmaschine beinflusst werden. Hinsichtlich des prinzipiellen Aufbaus und der Funktion der Schwenkwiegenlagerung 1 wird auf den eingangs zitierten Stand der Technik verwiesen.

Der Schwenkwiegenlagerung 1 ist eine insgesamt mit 4 bezeichnete Synchronisationsvorrichtung zuzurechnen, die dafür sorgt, dass die Verschwenkung des Käfigsegments 2 auf die Relativbewegung zwischen den zueinander verstellbaren Lagerteilen abgestimmt ist. Die Synchronisationsvorrichtung 4 umfasst einen Schwenkhebel 5, der im Käfigsegment 2 gelagert ist. Hierbei ist durch den Schwenkhebel 5 und das Käfigsegment 2 ein Gelenklager 6 ausgebildet. Das Gelenklager 6 ist gebildet durch ein Gleitlagerinnenstück 7, welches unmittelbar durch den Schwenkhebel 5 bereitgestellt wird, und ein Gleitlageraußenstück 8, welches durch eine Lagerplatte 9 des Käfigsegments 2 bereitgestellt wird. Die Lagerplatte 9 ist entsprechend der Krümmung des Käfigsegments 2 leicht gekrümmt und geht in eine Käfigleiste 10 über. Die Käfigleiste 10 ist über Stege 12 mit einer weiteren Käfigleiste 11 verbunden, wobei jeweils zwischen zwei in Umfangsrichtung benachbarten Stegen 12 eine Käfigtasche 3 gebildet ist. Die Stege 12 sind parallel zur Schwenkachse der Schwenkwiegenlagerung 1 ausgerichtet.

Das durch den Schwenkhebel 5 gebildete Gleitlagerinnenstück 7 wird auch als Gelenkkugel bezeichnet. Weiterhin weist der Schwenkhebel 5 an seinen beiden Enden jeweils eine Endkugel 13, 14 auf. Die radial innerhalb des Käfigsegments 2 angeordnete Gelenkkugel 13, das heißt diejenige Endkugel 13, die geringer als das Käfigsegment 2 von der Schwenkachse der Schwenkwiegenlagerung 1 beabstandet ist, weist einen geringeren Abstand von der Gelenkkugel 7 als die äußere Endkugel 14 auf. Dies ist gleichbedeutend damit, dass ein außenliegender Arm 15 des Schwenkhebels 5 länger ist als ein innenliegender Arm 16. Die Länge der Arme 15, 16 wird jeweils ausgehend vom Mittelpunkt des Gelenklagers 6 gemessen. Der Mittelpunkt des Gelenklagers 6 liegt in einer Tangentialebene TE, welche mittig zwischen die innere und die äußere Oberfläche der Lagerplatte 9 gelegt ist.

Das Gleitlagerinnenstück 7 hat eine sphärisch geformte Oberfläche und ist spiegelsymmetrisch zur Tangentialebene TE gestaltet. Das Gleitlagerinnenstück 7 ist in eine Durchgangsöffnung 28, welche sich in der Lagerplatte 9 befindet, eingesetzt.

Im Unterschied zum Gleitlagerinnenstück 7 ist das Gleitlageraußenstück 8, welches durch das Käfigsegment 2 bereitgestellt wird, unsymmetrisch zur Tangentialebene TE ausgebildet. Ein innerer Abschnitt 17 der Durchgangsöffnung 28 erstreckt sich von der Tangentialebene TE aus radial nach innen, das heißt in Richtung zur Schwenkachse der Schwenkwiegenlagerung 1. Der Krümmungsradius des inneren Abschnitts 17 ist dem Radius der Gelenkkugel 7 angepasst. Damit ist das Gelenklager 6 dazu ausgebildet, Kräfte, welche den Schwenkhebel 5 in dessen Längsrichtung radial nach innen belasten, abzustützen. Der innere Abschnitt 17 der Durchgangsöffnung 28 stellt eine sphärische Gleitlagerfläche dar.

Darüber hinaus ist das Gelenklager 6 auch in der Lage, ein Herausziehen des Schwenkhebels 5 aus dem Käfigsegment 2 nach außen zu verhindern, wobei in dieser Richtung vergleichsweise geringe Kräfte aufzunehmen sind. Die Sicherung des Schwenkhebels 5 gegen Herausziehen aus dem Käfigsegment 2 nach außen erfolgt in den beiden Ausführungsbeispielen auf unterschiedliche Weise, wie im Folgenden näher erläutert wird.

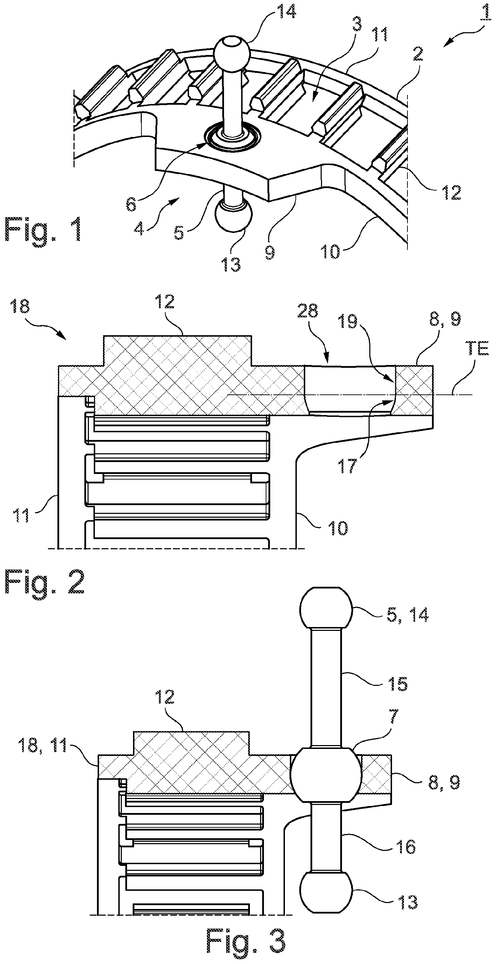

Bei der Herstellung der Synchronisationsvorrichtung 4 gemäß Fig. 1 wird von einem in Fig. 2 dargestellten Käfigsegment-Rohteil 18 ausgegangen. Die Form des Käfigsegmentrohteils 18 entspricht mit Ausnahme des Gleitlageraußenstücks 8 der Form des endgültigen Käfigsegments 2. Auch der innere Abschnitt 17 der Durchgangsöffnung 28 hat bereits seine endgültige Form.

Im Zuge der Herstellung der Synchronisationsvorrichtung 4 wird der Schwenkhebel 5 von außen in das Gleitlageraußenstück 8 eingesetzt, so dass sich die in Fig. 3 dargestellte Anordnung ergibt. Ein an den inneren Abschnitt 17 radial - bezogen auf die Schwenkachse - nach außen anschließender äußerer Abschnitt 19 der Durchgangsöffnung 28, das heißt der außerhalb der Tangentialebene TE liegende Bereich der Innenoberfläche des Gleitlageraußenstücks 8, ist zylindrisch - mit kreisrundem Querschnitt - geformt, wobei der Durchmesser des äußeren, zylindrischen Abschnitts 19 an den Durchmesser der Gelenkkugel 7 angepasst ist.

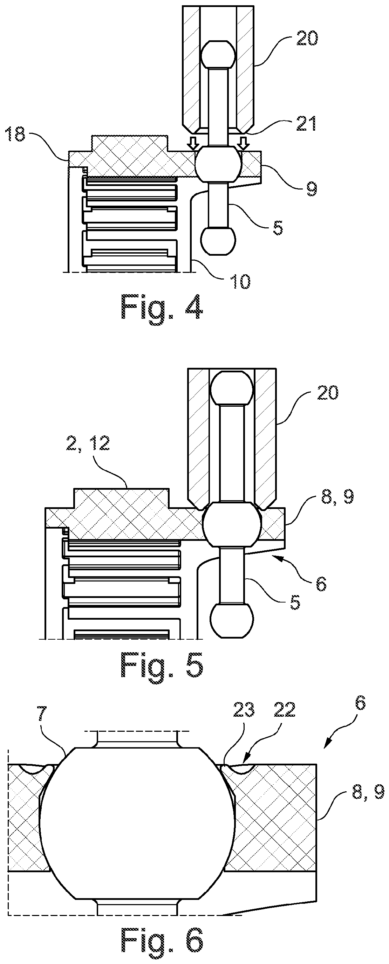

Nachdem der Schenkhebel 5 in das Gleitlageraußenstück 8 eingesetzt ist, wird die Lagerplatte 9 mit Hilfe eines in den Fig. 4 und 5 erkennbaren Werkzeugs 20 verformt. Zum Zweck der Verformung wird die Lagerplatte 9 vorübergehend erwärmt. Das als Stempel mit hohlzylindrischer Form ausgebildete Werkzeug 20 wird konzentrisch zum Gleitlageraußenstück 8 und zum Schwenkhebel 5 auf das Gelenklager 6 aufgesetzt, wobei eine ringförmige Bearbeitungskante 21, die eine Stirnfläche des Werkzeugs 20 bildet, in die Oberfläche der Lagerplatte 9 eingedrückt wird. Damit bildet sich an der Außenoberfläche der Lagerplatte 9 eine ringförmige Vertiefung 22, wobei durch Materialverdrängung zugleich ein ringförmiger Sicherungskragen 23 gebildet wird, durch welchen der äußere Abschnitt 19 verjüngt ist, so dass der Schwenkhebel 5 gegen Herausziehen aus dem Käfigsegment 2 nach außen gesichert ist und zugleich in der entsprechenden Richtung eine Gleitlagerung zwischen der Gelenkkugel 7 und dem Gleitlageraußenstück 8 gegeben ist. Ein zerstörungsfreies Demontieren des Gelenklagers 6 ist im Ausführungsbeispiel nach Fig. 1 nicht möglich.

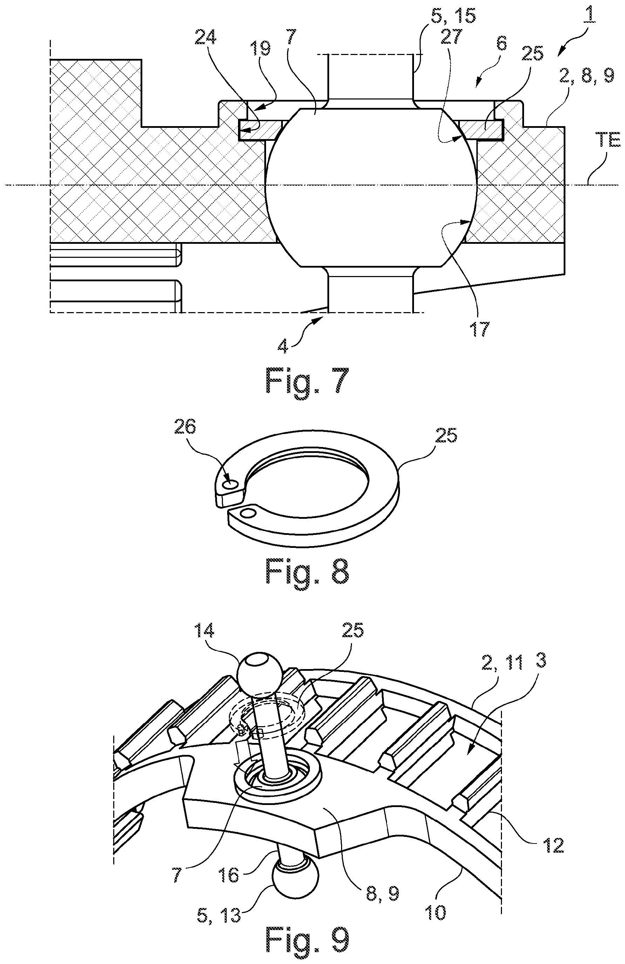

Im Ausführungsbeispiel nach Fig. 7 weist der äußere, zylindrische Abschnitt 19 des Gleitlageraußenstücks 8 eine Ringnut 24 auf. Eine Verformung des Käfigsegment-Rohteils 18 ist in diesem Fall nicht vorgesehen. Stattdessen wird nach dem Einsetzen des Schwenkhebels 5 in das Gleitlageraußenstück 8 ein in Fig. 8 isoliert dargestellter Sicherungsring 25 in die Ringnut 24 eingesetzt. Der nicht geschlossene Sicherungsring 25 weist an seinen beiden einander zugewandten Enden Öffnungen 26 auf, die das Ansetzen eines Werkzeugs zum Komprimieren des Sicherungsrings 25 ermöglichen. Mit demselben, nicht dargestellten Werkzeug ist auch eine Zerlegung des Gelenklagers 6 möglich. Im Übrigen erfüllt der Sicherungsring 25 einen dem Sicherungskragen 23 entsprechende Funktion. Zur Anpassung an die Form der Gelenkkugel 7 weist der Sicherungsring 25 an seiner Innenumfangsfläche eine Fase 27 auf.

### Bezugszeichenliste

- 1: Schwenkwiegenlagerung
- 2: Käfigsegment
- 3: Käfigtasche
- 4: Synchronisationsvorrichtung
- 5: Schwenkhebel
- 6: Gelenklager
- 7: Gleitlagerinnenstück, Gelenkkugel
- 8: Gleitlageraußenstück
- 9: Lagerplatte
- 10: Käfigleiste
- 11: Käfigleiste
- 12: Steg
- 13: innere Endkugel
- 14: äußere Endkugel
- 15: außenliegender Arm
- 16: innenliegender Arm
- 17: innerer Abschnitt der Durchgangsöffnung
- 18: Käfigsegment-Rohteil
- 19: äußerer Abschnitt der Durchgangsöffnung
- 20: Werkzeug, Stempel
- 21: Bearbeitungskante
- 22: ringförmige Vertiefung
- 23: Sicherungskragen
- 24: Ringnut
- 25: Sicherungsring
- 26: Öffnung
- 27: Fase
- 28: Durchgangsöffnung

- TE: Tangentialebene

## Patentansprüche

1. Schwenkwiegenlagerung (1), mit einem gebogenen Käfigsegment (2), in welchem Wälzkörper geführt sind, die zwischen zwei gegeneinander verschwenkbaren Lagerteilen angeordnet sind, wobei eine Synchronisationsvorrichtung (4), die zur Synchronisation der Relativbewegung der Lagerteile mit der Verlagerung des Käfigsegments (2) ausgebildet ist, einen Schwenkhebel (5) umfasst, der im Käfigsegment (2) gelagert ist, **dadurch gekennzeichnet, dass** zur Lagerung des Schwenkhebels (5) im Käfigsegment (2) ein Gelenklager (6) vorgesehen ist, welches bezüglich einer mittig zwischen eine Innenumfangsfläche und eine Außenumfangsfläche des Käfigsegments (2) gelegten Tangentialebene (TE) unsymmetrisch ausgebildet ist.

2. Schwenkwiegenlagerung (1) nach Anspruch 1, **dadurch gekennzeichnet, dass** ein durch den Schwenkhebel (5) gebildetes Gleitlagerinnenstück (7) im Gegensatz zum durch das Käfigsegment (2) gebildeten Gleitlageraußenstück (8) symmetrisch ausgebildet ist.

3. Schwenkwiegenlagerung (1) nach Anspruch 1 oder 2, **dadurch gekennzeichnet, dass** an der Außenumfangsfläche des Käfigsegments (2) eine das Gelenklager (6) umgebende, ringförmige Vertiefung (22) gebildet ist, welche außerhalb eines ringförmigen Sicherungskragens (23) angeordnet ist, der unmittelbar durch das Käfigsegment (2) gebildet ist und zusammen mit einer durch das Käfigsegment (2) bereitgestellten sphärischen Gleitlagerfläche (17) den Schwenkhebel (5) im Käfigsegment (2) unverlierbar hält.

4. Schwenkwiegenlagerung (1) nach Anspruch 3, **dadurch gekennzeichnet, dass** das Gleitlageraußenstück (8) einstückig unmittelbar durch das Käfigsegment (2) gebildet ist.

5. Schwenkwiegenlagerung (1) nach Anspruch 1 oder 2, **dadurch gekennzeichnet, dass** der Schwenkhebel (5) im Gelenklager (6) durch einen im Käfigsegment (2) gehaltenen Sicherungsring (25) gegen Herausziehen gesichert ist.

6. Schwenkwiegenlagerung (1) nach einem der Ansprüche 1 bis 5, **dadurch gekennzeichnet, dass** das Käfigsegment (2) aus Kunststoff gefertigt ist.

7. Verfahren zur Herstellung einer Synchronisationsvorrichtung (4) einer Schwenkwiegenlagerung (1), mit folgenden Schritten:
- Bereitstellung eines Käfigsegment-Rohteils (18), in welchem eine Durchgangsöffnung (28) mit einem zylindrischen Abschnitt (19) und einem sich an den zylindrischen Abschnitt (19) anschließenden, verjüngenden Abschnitt (17) angeordnet ist,
- Bereitstellung eines Schwenkhebels (5), welcher eine von seinen Enden beabstandete sphärische Verdickung (7) als Gleitlagerinnenstück aufweist,
- Einsetzen des Schwenkhebels (5) in die Durchgangsöffnung (28) des Käfigsegment-Rohteils (18), so dass die sphärische Verdickung (7) zur Anlage am sich verjüngenden Abschnitt (17) der Durchgangsöffnung (28) kommt,
- Verengung des zylindrischen Abschnitts (19) der Durchgangsöffnung (28), womit der Schwenkhebel (5) gegen Herausziehen aus der Durchgangsöffnung (28) gesichert wird.

8. Verfahren nach Anspruch 7, **dadurch gekennzeichnet, dass** der zylindrische Abschnitt (19) der Durchgangsöffnung (28) durch Erhitzen und Verformen des Käfigsegment-Rohteils (18) verengt wird.

9. Verfahren nach Anspruch 8, **dadurch gekennzeichnet, dass** die Verformung des Käfigsegment-Rohteils (18) durch Aufsetzen eines Stempels (20) mit ringförmiger Bearbeitungskante (21) auf die Außenumfangsfläche des Käfigsegment-Rohteils (18) erfolgt.

10. Verfahren nach Anspruch 7, **dadurch gekennzeichnet, dass** der zylindrische Abschnitt (19) durch Einsetzen eines Sicherungsrings (25) in das Käfigsegment-Rohteil (18) verengt wird.

## Claims

1. A pivot cradle bearing (1) having a curved cage segment (2), in which rolling bodies are guided, which are arranged between two bearing parts which can be pivoted with respect to one another, wherein a synchronization device (4), which is designed for synchronizing the relative movement of the bearing parts with the displacement of the cage segment (2), comprises a pivoting lever (5), which is mounted in the cage segment (2), **characterized in that** an articulated bearing (6) is provided for mounting the pivoting lever (5) in the cage segment (2), said articulated bearing being asymmetrical in design with respect to a tangential plane (TE) positioned centrally between an inner circumferential surface and an outer circumferential surface of the cage segment (2).

2. The pivot cradle bearing (1) according to claim 1, **characterized in that** an inner sliding bearing piece (7) formed by the pivoting lever (5) is symmetrical in design in contrast to the outer sliding bearing piece (8) formed by the cage segment (2).

3. The pivot cradle bearing (1) according to claim 1 or 2, **characterized in that** an annular recess (22) surrounding the articulated bearing (6) is formed on the outer circumferential surface of the cage segment (2), which is arranged outside of an annular locking collar (23), which is formed directly by the cage segment (2) and, together with a spherical sliding bearing surface (17) provided by the cage segment (2), captively holds the pivoting lever (5) in the cage segment (2).

4. The pivot cradle bearing (1) according to claim 3, **characterized in that** the outer sliding bearing piece (8) is formed in one piece directly by the cage segment (2).

5. The pivot cradle bearing (1) according to claim 1 or 2, **characterized in that** the pivoting lever (5) in the articulated bearing (6) is secured against being pulled out by a locking ring (25) held in the cage segment (2).

6. The pivot cradle bearing (1) according to one of claims 1 to 5, **characterized in that** the cage segment (2) is made of plastic.

7. A method for producing a synchronization device (4) of a pivot cradle bearing (1), having the following steps:
- providing a cage segment blank (18) in which a through-opening (28) with a cylindrical portion (19) and a tapering portion (17) adjoining the cylindrical portion (19) is arranged,
- providing a pivoting lever (5), which has a spherical thickened portion (7) as an inner sliding bearing piece spaced from the ends thereof,
- inserting the pivoting lever (5) into the through-opening (28) of the cage segment blank (18), such that the spherical thickened portion (7) abuts the tapering portion (17) of the through-opening (28),
- narrowing the cylindrical portion (19) of the through-opening (28), by means of which the pivoting lever (5) is secured against being pulled out of the through-opening (28).

8. The method according to claim 7, **characterized in that** the cylindrical portion (19) of the through-opening (28) is narrowed by heating and deforming the cage segment blank (18).

9. The method according to claim 8, **characterized in that** the cage segment blank (18) is deformed by placing a punch (20) with an annular machining edge (21) on the outer circumferential surface of the cage segment blank (18).

10. The method according to claim 7, **characterized in that** the cylindrical portion (19) is narrowed by inserting a locking ring (25) into the cage segment blank (18).

## Revendications

1. Palier à berceau pivotant (1) avec un segment de cage incurvé (2) dans lequel sont guidés des éléments roulants qui sont agencés entre deux pièces de palier pouvant pivoter l'une par rapport à l'autre, un dispositif de synchronisation (4) destiné à synchroniser le mouvement relatif des pièces de palier avec le déplacement du segment de cage (2) étant formé, lequel comprend un levier pivotant (5) qui est monté dans le segment de cage (2), **caractérisé en ce que**, pour le rangement du levier pivotant (5) dans le segment de cage (2), un palier à rotule (6) est prévu, lequel est conçu de manière asymétrique par rapport à un plan tangentiel (TE) placé au centre entre une surface périphérique intérieure et une surface périphérique extérieure du segment de cage (2).

2. Palier à berceau pivotant (1) selon la revendication 1, **caractérisé en ce qu'**une pièce intérieure à palier lisse (7) formée par le levier pivotant (5) est formée de manière symétrique par rapport à la pièce extérieure à palier lisse (8) formée par le segment de cage (2).

3. Palier à berceau pivotant (1) selon la revendication 1 ou 2, **caractérisé en ce qu'**un évidement annulaire (22) entourant le palier à rotule (6) est formé sur la surface périphérique extérieure du segment de cage (2) et agencé à l'extérieur d'un collier de fixation annulaire (23) qui est formé directement par le segment de cage (2) et qui, conjointement avec une surface de palier lisse sphérique (17) fournie par le segment de cage (2), retient de façon imperdable le levier pivotant (5) dans le segment de cage (2).

4. Palier à berceau pivotant (1) selon la revendication 3, **caractérisé en ce que** la pièce extérieure à palier lisse (8) est formée d'un seul tenant directement par le segment de cage (2).

5. Palier à berceau pivotant (1) selon la revendication 1 ou 2, **caractérisé en ce que** le levier pivotant (5) dans le palier à rotule (6) est sécurisé contre toute extraction par une bague de fixation (25) retenue dans le segment de cage (2).

6. Palier à berceau pivotant (1) selon l'une quelconque des revendications 1 à 5, **caractérisé en ce que** le segment de cage (2) est fabriqué en plastique.

7. Procédé de fabrication d'un dispositif de synchronisation (4) d'un palier à berceau pivotant (1) comprenant les étapes suivantes, à savoir :
- la mise à disposition d'une ébauche (18) de segment de cage dans laquelle est agencée une ouverture traversante (28) présentant une section cylindrique (19) et une section tronconique (17) adjacente à la section cylindrique (19),
- la fourniture d'un levier pivotant (5) qui présente un épaississement sphérique (7) à distance de ses extrémités en tant que pièce intérieure à palier lisse,
- l'insertion du levier pivotant (5) dans l'ouverture traversante (28) de l'ébauche (18) de segment de cage, de sorte que l'épaississement sphérique (7) vienne en appui sur la section tronconique (17) de l'ouverture traversante (28),
- le rétrécissement de la section cylindrique (19) de l'ouverture traversante (28), moyennant quoi le levier pivotant (5) est sécurisé contre toute extraction hors de l'ouverture traversante (28).

8. Procédé selon la revendication 7, **caractérisé en ce que** la section cylindrique (19) de l'ouverture traversante (28) est rétrécie par chauffage et déformation de l'ébauche (18) de segment de cage.

9. Procédé selon la revendication 8, **caractérisé en ce que** la déformation de l'ébauche (18) de segment de cage est effectuée en plaçant un poinçon (20) à arête d'usinage annulaire (21) sur la surface périphérique extérieure de l'ébauche (18) de segment de cage.

10. Procédé selon la revendication 7, **caractérisé en ce que** la section cylindrique (19) est rétrécie par l'insertion d'une bague de fixation (25) dans l'ébauche (18) de segment de cage.
